# EUROPÄISCHE PATENTSCHRIFT

(11) **EP 4 248 175 B1**
(45) Veröffentlichungstag und Bekanntmachung des Hinweises auf die Patenterteilung: **13.08.2025**
(21) Anmeldenummer: 21809970.3
(22) Anmeldetag: 08.11.2021
(51) Int. Cl.: G01D 5/20, G01D 5/244

(54) **SENSORSYSTEM ZUR BESTIMMUNG MINDESTENS EINER ROTATIONSEIGENSCHAFT EINES ROTIERENDEN ELEMENTS**
SENSORSYSTEM FOR DETERMINING AT LEAST ONE ROTATION PROPERTY OF A ROTATING ELEMENT
SYSTÈME DE CAPTEUR POUR LA DÉTERMINATION D'AU MOINS UNE CARACTÉRISTIQUE DE ROTATION D'UN ÉLÉMENT TOURNANT

(30) Priorität: 18.11.2020 DE 102020214492
(43) Veröffentlichungstag der Anmeldung: 27.09.2023
(73) Patentinhaber: Robert Bosch GmbH, 70442 Stuttgart (DE)
(72) Erfinder: YASHAN, Andre, 70191 Stuttgart (DE)
(86) Internationale Anmeldenummer: PCT/EP2021/080919
(87) Internationale Veröffentlichungsnummer: WO 2022/106238

(56) Entgegenhaltungen:
- DE-A1- 102015 220 624
- DE-A1- 102018 213 402
- US-A1- 2017 043 976

## Beschreibung

### Stand der Technik

Aus dem Stand der Technik sind zahlreiche Sensoren bekannt, welche mindestens eine Rotationseigenschaft rotierender Elemente erfassen. Beispiele derartiger Sensoren sind in Konrad Reif (Hrsg.): Sensoren im Kraftfahrzeug, 2. Auflage, 2012, Seiten 63-74 und 120-129 beschrieben. Beispielsweise kann eine Lage einer Nockenwelle einer Brennkraftmaschine relativ zu einer Kurbelwelle mit einem Phasengeber mittels eines Hall-Sensors bestimmt werden.

Beispielsweise für eine Realisierung einer Traktion in Elektrofahrzeugen werden häufig entweder Asynchronmaschinen oder Synchronmaschinen verwendet, welche jeweils aus einem ortsfesten Stator und einem sich drehenden Rotor bestehen. Der Stator trägt in der Regel drei, beispielsweise um 120°/p zueinander versetzte Wicklungsstränge, wobei p eine Anzahl von Polpaaren repräsentiert. Bei Asynchronmaschinen besteht der Rotor üblicherweise aus an Enden ringförmig kurzgeschlossenen elektrisch leitfähigen Stäben. Bei einer Drehung eines Rotorfeldes kann so in den Stäben eine Spannung induziert werden, welche einen Stromfluss hervorruft, welcher wiederum ein Gegenmagnetfeld aufbaut und es zu einer rotatorischen Bewegung kommt. Die induzierte Spannung ist Null, wenn sich Rotorfeld und Stator gleich schnell drehen. Es stellt sich eine Drehzahldifferenz ein, welche als Schlupf bezeichnet wird und welche das Moment des Motors definiert. Bei Synchronmaschinen umfasst der Rotor einen Läufer, welcher eine Erregerspule trägt, in welchem ein Gleichstrom fließt und ein statisches Magnetfeld erzeugt. Alternativ dazu kann ein Permanentmagnet als Rotor verwendet werden. Es handelt sich dann um eine permanent erregte Synchronmaschine, welche aufgrund der leistungslosen Erregung einen höheren Wirkungsgrad aufweist und so für Traktionsanwendungen geeigneter sein kann. Eine Drehzahl des Rotors kann prinzipbedingt identisch zur Drehzahl eines Erregerfelds sein. Das Drehmoment kann von einem Phasenversatz, also einer Winkeldifferenz zwischen Statorfeld und Rotor, abhängen. Zur Regelung des Moments, Ansteuerung eines Inverters und entsprechender Bereitstellung von Statorspulensignalen muss für Asynchronmaschinen die Drehzahl des Rotors und für Synchronmaschinen eine Absolutwinkelstellung des Rotors bekannt sein.

Um diese Größen zu ermitteln, wird häufig ein so genannter Resolver verwendet. Bei diesem handelt es sich in der Regel um einen elektromagnetischen Messumformer, bei dem ein Rotorpaket drehzahlfest auf der Welle des Motors montiert ist. Kreisringförmig umlaufend sind auf einem Stator eine Erregerspule sowie zwei Empfangsspulen montiert. Die Erregerspule wird mit einem Wechselspannungssignal beaufschlagt und durchsetzt die gesamte Anordnung mit einem elektromagnetischen Wechselfeld. Drehwinkelabhängig wird nun in der ersten Empfangsspule eine sinusförmig amplitudenmodulierte Spannung induziert während in der zweiten Empfangsspule eine cosinusförmig amplitudenmodulierte Spannung induziert wird. Die komplette Bereitstellung des Erregersignals sowie das Auslesen der Signale werden innerhalb der Leistungselektronik oder dedizierten Bausteinen innerhalb des Steuergerätes zur Motorregelung realisiert. Damit ist der Resolver für sich betrachtet eine rein passive Komponente und dadurch per Definition ASIL D fähig (ASIL: Automotive Safety Integrity Level). Bei der ASIL-Fähigkeit, die mit den Buchstaben A bis D klassifiziert wird, handelt es sich um eine quantitative Größe, die angibt, welcher Anteil an ungewollten Betriebszuständen des Sensors erkannt wird, also beispielsweise Kurzschlüsse, Unterbrechungen der Spulen, unplausible Signale oder ähnlichen Betriebszuständen. Der Resolver benötigt allerdings in der Regel relativ viel Bauraum, zieht eine komplexe Signalbereitstellung und Signalaufbereitung nach sich und muss in der Regel mit sehr geringen mechanischen Toleranzen montiert werden, um eine ausreichend hohe Genauigkeit zu erreichen. Aus diesen Gründen sind die Systemkosten entsprechend hoch. Neben elektromagnetischen Resolvern existierten auch optische Resolver, wie beispielsweise in DE 10 2013 203 937 A1 beschrieben, die allerdings neben hohen Kosten in der Regel eine Querempfindlichkeit gegenüber Verschmutzung aufweisen und demzufolge nicht in jedem Umfeld einsetzbar sind.

Alternativ können auch induktive Absolutwinkelsensoren auf Basis gekoppelter Spulen verwendet werden, wie beispielsweise in DE 10 2016 202 877 B3 beschrieben. Dort wird ein Drehwinkelsensor beschrieben, umfassend ein Statorelement mit einer Sendespule und wenigstens zwei innerhalb der Sendespule angeordnete Empfangsspulen, die auf einer Leiterplatte angeordnet sind. Der Drehwinkelsensor umfasst weiterhin ein bezüglich des Statorelements um eine Drehachse drehbar gelagertes Rotorelement, über das die Sendespule mit den wenigstens zwei Empfangsspulen induktiv gekoppelt ist, so dass die induktive Kopplung von einem Drehwinkel zwischen dem Statorelement und dem Rotorelement abhängig ist und die Sendespule in den wenigstens zwei Empfangsspulen wenigstens zwei winkelabhängige Wechselspannungen induziert. Das Rotorelement und die wenigstens zwei Empfangsspulen sind derart ausgebildet, dass in den Empfangsspulen eine Wechselspannung induziert wird, deren Amplitude sinusförmig von dem Drehwinkel abhängig ist. Eine technische Herausforderung besteht in der Regel darin, dass für die Realisierung der Sensorfunktion die Bereitstellung des Erregersignals sowie die Auswertung der Empfangsspulensignale aufgrund der hohen Frequenz häufig nicht mehr im Steuergerät realisiert werden können, so dass es in der Regel eines ASICs der Sensorelektronik bedarf, der direkt auf der Leiterplatte platziert wird, die auch die Spulenstrukturen trägt. Neben der eigentlichen Sensorfunktion muss dieser ASIC in vielen Fällen auch einen hohen Diagnoseanteil realisieren und beispielsweise Nebenschlüsse erkennen sowie die Frequenz/Amplitude des Erregersignals überwachen. Zur Erreichung einer ASIL D Fähigkeit werden häufig zwei ASICs mit mindestens einem separaten Empfangsspulensystem eingesetzt und beide Winkelsignale vom Steuergerät verglichen. Dies erhöht die Kosten der Elektronik sowie die Komplexität der Zuleitungen. Weiterhin stellen so genannte Common-Cause-Fehler eine Herausforderung dar, also systematische Fehler beim ASIC Design, die gleichzeitig bei beiden ASICs auftreten können.

Um eine hohe ASIL Klassifikation zu erreichen und Common-Cause-Fehler auszuschließen, kann auch auf zwei diversitäre Sensorkonzepte gesetzt werden.

Hier ist es beispielsweise üblich magnetfeldbasierte Drehwinkelsensoren zu verwenden. Dazu wird ein Magnet an einem Rotor angebracht, der sich gegenüber einem als ortsfest angenommenen Magnetfeldsensor dreht. Im einfachsten Fall ist der Magnet diametral magnetisiert, weist also zwei entgegengesetzt magnetisierte Bereiche auf, die jeweils gleich große Winkelbereiche, beispielsweise jeweils 180°, umfassen und symmetrisch bezüglich der Drehachse angeordnet sind. Die Messung des Magnetfeldvektors erlaubt leicht einen Rückschluss auf den Drehwinkel.

DE 10 2018 213 402 A1 offenbart auch einen induktiven Positionssensor mit einer Erregerspule und mindestens zwei Empfängerspulen, wobei eine Diagnosefunktion implementiert wird.

Derzeit existierende Sensorelektronik, die üblicherweise als ASIC realisiert ist, bietet funktionale Sicherheit bis ASIL C(D) pro Sensorkanal. Für die Anforderung ASIL D muss die Sensorelektronik redundant ausgeführt werden, was zur Kosten-Erhöhung führt sowohl für den Sensor (Ausführung der Sensor-Elektronik mit 2 vollständigen, ggf. galvanisch isolierten Kanälen) als auch für das Gesamtsystem (Kabelschnittstelle mit erhöhter Leitungsanzahl, komplexere Signalerfassungs-Elektronik sowie Software usw.).

### Offenbarung der Erfindung

Im Rahmen der vorliegenden Erfindung wird daher ein Sensorsystem zur Bestimmung mindestens einer Rotationseigenschaft eines um mindestens eine Rotationsachse rotierenden Elements vorgeschlagen, das zur Funktions-Plausibilisierung eines induktiven Winkel- bzw. Positionssensors mit möglichst geringem Mehraufwand der Zusatz-Elektronik mit maximalem Abdeckungsgrad der Plausibilisierung ausgebildet ist. Unter einem "Sensorsystem" wird im Rahmen der vorliegenden Erfindung grundsätzlich eine beliebige aus einer Mehrzahl von Komponenten bestehende Vorrichtung verstanden, welche geeignet ist, mindestens eine Messgröße zu erfassen, beispielsweise zu messen. Insbesondere kann das Sensorsystem zur Bestimmung der mindestens einen Rotationseigenschaft des rotierenden Elements beispielsweise mindestens ein elektrisches Signal entsprechend der Rotationseigenschaft erzeugen, wie beispielsweise eine Spannung oder einen Strom. Insbesondere kann das Sensorsystem zur Bestimmung der mindestens einen Rotationseigenschaft das mindestens eine elektrische Signal beispielsweise auch auswerten.

Unter einer "Rotationseigenschaft" wird im Rahmen der vorliegenden Erfindung grundsätzlich eine Eigenschaft verstanden werden, welche die Rotation des rotierenden Elements zumindest teilweise beschreibt. Hierbei kann es sich beispielsweise um eine Winkelgeschwindigkeit, eine Drehzahl, eine Winkelbeschleunigung, eine Winkelposition oder eine andere Eigenschaft handeln, welche eine kontinuierliche oder diskontinuierliche, gleichförmige oder ungleichförmige Rotation oder Drehung des rotierenden Elements zumindest teilweise charakterisieren kann. Beispielsweise kann es sich bei der Rotationseigenschaft um eine Position, insbesondere eine Winkelposition oder eine Winkelstellung, eine Drehzahl, eine Winkelbeschleunigung oder um eine Kombination von mindestens zwei dieser Größen handeln. Auch andere Eigenschaften und/oder andere Kombinationen von Eigenschaften können erfassbar sein. Unter einer "Winkelposition" oder einer "Winkelstellung" wird im Rahmen der vorliegenden Erfindung grundsätzlich ein Drehwinkel einer rotationsfähigen Vorrichtung, beispielsweise des rotierenden Elements oder eines Geberrads des Sensorsystems, bezüglich einer senkrecht auf der Rotationsachse stehenden Achse verstanden.

Das Sensorsystem kann insbesondere zum Einsatz in einem Kraftfahrzeug eingerichtet sein. Unter einem "rotierenden Element" wird im Rahmen der vorliegenden Erfindung grundsätzlich ein beliebiges Element verstanden, welches um mindestens eine Achse rotiert. Beispielsweise kann das rotierende Element eine Welle sein, beispielsweise eine Welle in einer Antriebsmaschine, beispielsweise eine Nockenwelle oder eine Kurbelwelle. Beispielsweise kann eine Winkelposition einer Nockenwelle oder eine Drehzahl einer Nockenwelle oder eine Winkelbeschleunigung einer Nockenwelle oder eine Kombination von mindestens zwei dieser Größen bestimmt werden. Auch andere Eigenschaften und/oder andere Kombinationen von Eigenschaften können erfassbar sein.

Das Sensorsystem umfasst mindestens einen Schaltungsträger. Unter einem "Schaltungsträger" kann eine Vorrichtung verstanden werden, auf welcher mindestens ein elektrisches Bauelement angeordnet werden kann. Der Schaltungsträger kann flexibel ausgestaltet sein. Insbesondere kann der Schaltungsträger ein flexibles Material umfassen. Der Schaltungsträger kann insbesondere ausgewählt sein aus der Gruppe bestehend aus: einer Leiterplatte, insbesondere einer Starrflex-Leiterplatte, beispielsweise einer gebogenen Starrflex-Leiterplatte; einer starren Leiterplatte, insbesondere einer starren Leiterplatte mit Einkerbungen; einer Leiterkarte; einer Platine und einer gedruckten Schaltung, insbesondere einem "printed circuit board" (PCB). Insbesondere kann der Schaltungsträger beispielsweise auch mindestens zwei parallel zueinander angeordnete Flächen, beispielsweise Ebenen, aufweisen. So kann der Schaltungsträger beispielsweise aus einer Mehrzahl von Schichten aufgebaut sein. Insbesondere mehrere Schichten aufweisen.

Der Schaltungsträger des Sensorsystems trägt eine Erregerspule welche mindestens einen Erregerbereich umschließt. Weiterhin trägt der Schaltungsträger in dem Erregerbereich mindestens zwei Empfangsspulen. Jede der Empfangsspulen kann jeweils mindestens zwei gegensinnig von der jeweiligen Empfangsspule umschlossene, nicht deckungsgleiche Teilbereiche innerhalb des Erregerbereichs umschließen.

Unter einer "Spule" wird im Rahmen der vorliegenden Erfindung grundsätzlich ein beliebiges Bauelement verstanden, welches eine Induktivität aufweist und geeignet ist, bei Stromfluss ein Magnetfeld zu erzeugen und/oder umgekehrt. Beispielsweise kann eine Spule mindestens eine vollständige oder teilweise geschlossene Leiterschleife oder Windung umfassen. Unter einer "Erregerspule" kann im Rahmen der vorliegenden Erfindung grundsätzlich eine Spule verstanden werden, welche bei Anlegen einer elektrischen Spannung und/oder eines elektrischen Stroms einen magnetischen Fluss erzeugt. Die Erregerspule kann mindestens eine Erregerwindung aufweisen. Insbesondere kann unter dem Begriff "Erregerbereich" grundsätzlich ein beliebiger Raum verstanden werden welcher von der Erregerspule umschlossen, beispielsweise begrenzt, wird. Beispielsweise kann der Erregerbereich durch die Erregerwindung, beispielsweise die mindestens eine Leiterschleife oder Windung der Erregerspule, umschlossen sein.

Die mindestens zwei Empfangsspulen können insbesondere in dem Erregerbereich auf dem Schaltungsträger angeordnet sein. Unter einer "Empfangsspule" wird im Rahmen der vorliegenden Erfindung grundsätzlich eine Spule verstanden, welche eingerichtet ist, aufgrund einer induktiven Kopplung zwischen Erregerspule und Empfangsspule ein Signal zu erzeugen, welches abhängig ist von der induktiven Kopplung. Insbesondere kann die Empfangsspule mindestens eine Empfangswindung aufweisen. Weiterhin kann die Empfangsspule beispielsweise mindestens zwei Teilbereiche umschließen. Unter dem Begriff "Teilbereich" kann grundsätzlich ein beliebiger Raum verstanden werden welcher von mindestens einem Teil der Empfangswindung umschlossen wird. Beispielsweise kann die Empfangsspule mindestens zwei gegensinnig nicht deckungsgleiche Teilbereiche aufweisen. Unter "gegensinnigen Teilbereichen" wird dabei in Rahmen der vorliegenden Erfindung grundsätzlich verstanden, dass die mindestens zwei Teilbereiche der Empfangsspule von mindestens zwei sich in ihrer Orientierung unterscheidenden Teilen der Empfangswindung umschlossen werden. Insbesondere kann dabei der erste Teilbereich von einem im Uhrzeigersinn orientierten ersten Teil der Empfangswindung umschlossen sein, wohingegen der zweite Teilbereich von einem gegen den Uhrzeigersinn orientierten zweiten Teil der Empfangswindung umschlossen sein kann, oder umgekehrt.

Das Sensorsystem umfasst weiterhin mindestens eine Steuerung zur Bestimmung der mindestens einen Rotationseigenschaft aus Signalen der Empfangsspulen. Unter einer "Steuerung" kann dabei allgemein eine elektronische Vorrichtung verstanden sein, welche eingerichtet ist, um von den Empfangsspulen generierte Signale, insbesondere Spannungssignale und/oder Stromsignale, auszuwerten und daraus die mindestens eine Rotationseigenschaft des rotierenden Elements zu bestimmen. Beispielsweise können zur Übertragung der Signale ein oder mehrere elektronische Verbindungen zwischen der Steuerung und den weiteren Komponenten des Sensorsystems vorgesehen sein. Die Steuerung kann insbesondere eine Datenverarbeitungsvorrichtung umfassen, beispielsweise mindestens einen Computer oder Mikrocontroller. Die Datenverarbeitungsvorrichtung kann beispielsweise einen oder mehrere flüchtige und/oder nicht flüchtige Datenspeicher aufweisen. Die Steuerung, insbesondere die Datenverarbeitungsvorrichtung, kann beispielsweise programmtechnisch eingerichtet sein, um ein oder mehrere Komponenten des Sensorsystems anzusteuern. Die Steuerung kann beispielsweise weiterhin mindestens eine Schnittstelle umfassen, insbesondere eine elektronische Schnittstelle und/oder eine Mensch-Maschine-Schnittstelle wie beispielsweise eine Eingabe-/AusgabeVorrichtung wie ein Display und/oder eine Tastatur. Die Steuerung kann beispielsweise zentral oder auch dezentral aufgebaut sein. Auch andere Ausgestaltungen sind denkbar. Insbesondere kann die Steuerung beispielsweise in einem anwendungsspezifischen integrierten Schaltkreis (ASIC), auch im ASIC der Sensorelektronik, ausgebildet sein.

Weiterhin trägt der Schaltungsträger mindestens eine Steuerspule. Die Steuerspule ist mit der Steuerung verbunden. Unter einer "Steuerspule" wird im Rahmen der vorliegenden Erfindung grundsätzlich eine beliebig ausgeformte Spule verstanden, welche eingerichtet ist, um mindestens ein Signal zu erzeugen, welches zu einer Veränderung der Signale der Empfangsspulen geeignet ist. Zu diesem Zweck kann die Steuerung die Steuerspule derart ansteuern, dass ein Lastwiderstand bzw. Lastimpedanz der Steuerspule verändert wird. Bei einer geeigneten räumlichen Anordnung der Steuerspule wird die Veränderung ihres Lastwiderstands bzw. ihrer Lastimpedanz die Signale in den Sensorspulen und insbesondere in den Empfangsspulen auf eine definierte Weise beeinflussen, z.B. die Amplitude der Spulen-Signale verändern. Die Veränderung des Lastwiderstands kann dabei auf Aufforderung des Steuergeräts des Sensorsystems (z.B. Steuerbit EIN/AUS), auf Aufforderung des ASICs der Sensorelektronik oder automatisch (z.B. wiederholend mit vordefinierter Periodizität) erfolgen. Bei besonders vorteilhafter Auslegung bleibt die Hauptfunktion des Sensors (Positionsbestimmung) in allen Betriebszuständen der Zusatzelektronik uneingeschränkt verfügbar.

Beispielsweise kann die Steuerspule das Signal erzeugen zur Auswertung der Diagnoseinformation, beispielsweise einer Funktionsfähigkeit des Sensorsystems, eine Unversehrtheit von Komponenten des Sensorsystems, insbesondere eine Funktionsfähigkeit der Erregerspule sowie der Empfangsspulen, beispielweise eine korrekte Ansteuerung der Erregerspule. So kann die Steuerspule beispielsweise eine Diagnose- und/oder Überwachungsfunktion übernehmen. Insbesondere kann die Steuerspule beispielsweise mindestens eine Windung aufweisen, wobei die Windung vorzugsweise lediglich eine Orientierung aufweist. So kann die Steuerspule beispielsweise mindestens eine Windung aufweisen, welche beispielsweise entweder rechtsgekrümmt oder linksgekrümmt sein kann. Insbesondere kann die Steuerspule auch eine Mehrzahl von Windungen aufweisen, beispielsweise eine in mehreren Ebenen des Schaltungsträgers angeordnete Mehrzahl von Windungen.

Insbesondere kann die mindestens eine Steuerspule außerhalb des Erregerbereichs angeordnet sein. So kann die Steuerspule beispielsweise außerhalb des von der Erregerspule umschlossenen Bereichs angeordnet sein.

Alternativ kann die mindestens eine Steuerspule auch innerhalb des Erregerbereichs angeordnet sein. So kann die Steuerspule beispielsweise zusammen mit den mindestens zwei Empfangsspulen innerhalb des von der Erregerspule umschlossenen Bereichs angeordnet sein.

Die Steuerung ist insbesondere ausgebildet zum sprungweisen Verändern des Lastwiderstands der Steuerspule. Beispielsweise ist die Steuerung ausgebildet zum Verändern des Lastwiderstands der Steuerspule zwischen einem (näherungsweise) Leerlauf und einem (näherungsweise) Kurzschluss. Die Veränderung des Lastwiderstands ist dabei abhängig vom Steuersignal der Steuerung.

Alternativ oder ergänzend kann die Steuerung zum nach einem vorgegebenen Muster modulierten Verändern des Lastwiderstands der Steuerspule ausgebildet sein - ebenfalls abhängig vom Steuersignal der Steuerung.

Das Sensorsystem kann weiterhin mindestens ein elektrisches oder elektronisches Schaltelement bzw. Steuerelement umfassen. Die Steuerung kann zum Verändern des Lastwiderstands der Steuerspule mittels des Schaltelements bzw. Steuerelements ausgebildet sein.

Das Schaltelement bzw. Steuerelement kann ein Schalter, Mikroschalter, Transistor, wie beispielsweise Feldeffekttransistor, Operationsverstärker, Komparator und/oder Multiplexer umfassen.

Das Sensorsystem kann weiterhin mindestens einen Logikbaustein umfassen, wobei der Logikbaustein das Schaltelement aufweist. Unter einem "Logikbaustein" kann man grundsätzlich digitale integrierte Schaltkreise verstehen, welche in der Bandbreite von sehr einfachen bis hin zu sehr komplexen logischen Schaltfunktionen realisiert werden können. Die Palette an Bauteilen reicht von Bauelementen mit mehreren einfachen Logikgattern, wie beispielsweise UND-, ODER- und NAND-Gatter (siehe Bild) sowie Flipflops, bis hin zu programmierbaren Logikbauelementen wie PLDs, FPGAs, Gate-Arrays und kundenspezifischen integrierten Schaltungen (ASICs).

Die Diagnoseinformation kann basierend auf Signalen der Empfangsspulen und eines zeitlichen Zusammenhangs der Signale der Empfangsspulen mit einem Steuersignal der Steuerung zum Verändern des Lastwiderstands der Steuerspule erzeugbar sein.

Die Diagnoseinformation kann basierend auf Amplituden der Signale der Empfangsspulen und eines zeitlichen Zusammenhangs der Signale der Empfangsspulen mit einem Steuersignal der Steuerung zum Verändern des Lastwiderstands der Steuerspule erzeugbar sein.

Die Rotationseigenschaft des rotierenden Elements kann basierend auf einem Verhältnis der Signale der Empfangsspulen bestimmbar sein. Dem Steuergerät bleibt entsprechend die Möglichkeit erhalten, die Winkel- bzw. Positionsinformation kontinuierlich (da amplituden-unabhängig) aus den Sensor-Ausgangssignalen der Empfangsspulen zu berechnen.

Die Steuerung kann ein Mikrocontroller sein. Entsprechend lässt sich die Steuerung kompakt realisieren.

In einem weiteren Aspekt der vorliegenden Erfindung wird ein Verfahren zur Diagnose eines um mindestens eine Rotationsachse rotierenden Elements vorgeschlagen. Das Verfahren umfasst die folgenden Schritte, bevorzugt in der angegebenen Reihenfolge. Das Verfahren kann, zusätzlich zu den genannten Verfahrensschritten, auch weitere Verfahrensschritte aufweisen. Die Verfahrensschritte sind:
- Bereitstellung mindestens eines Sensorsystems;
- Verändern eines Lastwiderstands der Steuerspule derart, dass Signale der Empfangsspulen zum Erzeugen mindestens einer Diagnoseinformation veränderbar sind;
- Auswertung mindestens eines Signals der Empfangsspulen, wobei bei der Auswertung mindestens eine Diagnoseinformation gewonnen wird.

Bei bereitgestellten Sensorsystem handelt es sich dabei um ein Sensorsystem gemäß der vorliegenden Erfindung, also gemäß einer der oben genannten Ausführungsformen oder gemäß einer der unten noch näher beschriebenen Ausführungsformen des Sensorsystems. Dementsprechend kann für Definitionen und optionale Ausgestaltungen weitgehend auf die Beschreibung des Sensorsystems verwiesen werden. Auch andere Ausgestaltungen sind jedoch grundsätzlich möglich.

Ferner wird im Rahmen der vorliegenden Erfindung ein Computerprogramm vorgeschlagen, das bei Ablauf auf einem Computer oder Computer-Netzwerk das erfindungsgemäße Verfahren in einer seiner Ausgestaltungen ausführt. Weiterhin wird im Rahmen der vorliegenden Erfindung ein Computerprogramm mit Programmcode-Mitteln vorgeschlagen, um das erfindungsgemäße Verfahren in einer seiner Ausgestaltungen durchzuführen, wenn das Programm auf einem Computer oder Computer- Netzwerk ausgeführt wird. Insbesondere können die Programmcode-Mittel auf einem computerlesbaren Datenträger gespeichert sein. Außerdem wird im Rahmen der vorliegenden Erfindung ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann. Auch wird im Rahmen der vorliegenden Erfindung ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden. Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Das erfindungsgemäße Sensorsystem erlaubt eine Funktions-Plausibilisierung eines induktiven Winkel- bzw. Positionssensors mit möglichst geringem Mehraufwand der Zusatz-Elektronik mit maximalem Abdeckungsgrad der Plausibilisierung. Im Gegensatz zum Stand der Technik enthält das erfindungsgemäße Sensorsystem nur einen Sensorkanal, der zur Plausibilisierung mit einer kostengünstigen Zusatzelektronik ergänzt wird.

### Kurze Beschreibung der Zeichnungen

Wesentliche sowie optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: ein erfindungsgemäßes Sensorsystem gemäß einer ersten Ausführungsform;
- Figur 2: einen beispielhaften Verlauf von Signalen bei dem Sensorsystem der ersten Ausführungsform;
- Figur 3: ein erfindungsgemäßes Sensorsystem gemäß einer zweiten Ausführungsform;
- Figur 4: ein erfindungsgemäßes Sensorsystem gemäß einer dritten Ausführungsform.

### Ausführungsformen der Erfindung

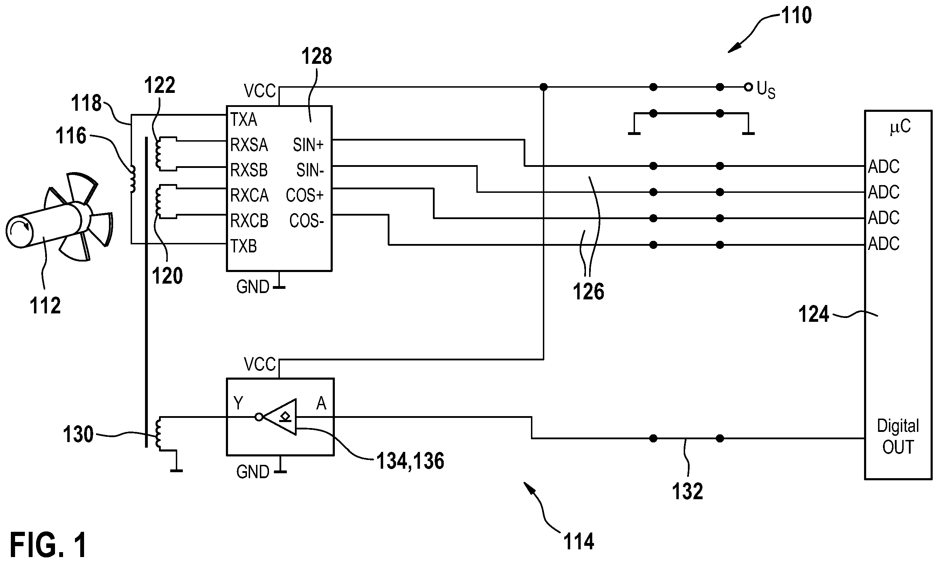

In Figur 1 ist ein Sensorsystem 110 zur Bestimmung mindestens einer Rotationseigenschaft eines um mindestens eine Rotationsachse 112 rotierenden Elements gemäß einer ersten Ausführungsform gezeigt. Das Sensorsystem 110 kann insbesondere zum Einsatz in einem Kraftfahrzeug, beispielsweise in einem Antriebssystem, eingerichtet sein. Insbesondere kann das Sensorsystem 110 zur Erfassung mindestens einer Rotationseigenschaft eines Rotors eingerichtet sein. Beispielsweise kann das Sensorsystem 110 eingerichtet sein, eine Winkelposition eine Drehzahl oder eine Drehrichtung des Rotors zu erfassen. Dementsprechend kann es sich bei dem rotierenden Element beispielsweise um eine Welle, insbesondere um eine mit dem Rotor verbundene Welle handeln. Das Sensorsystem 110 umfasst mindestens einen Schaltungsträger 114. Der Schaltungsträger 114 trägt eine Erregerspule 116, wobei die Erregerspule 116 mindestens einen Erregerbereich 118 umschließt. Der Schaltungsträger 114 trägt in dem Erregerbereich 118 weiterhin mindestens zwei Empfangsspulen 120, 122 wobei jede der Empfangsspulen 120, 122 jeweils mindestens zwei gegensinnig von der jeweiligen Empfangsspule 120, 122 umschlossene, nicht deckungsgleiche Teilbereiche innerhalb des Erregerbereichs 118 umschließen kann. Insbesondere können die Teilbereiche der Empfangsspulen 120, 122 jeweils im Wesentlichen spiegelsymmetrisch zu einer senkrecht zur Rotationsachse 112 durch die Rotationsachse 112 verlaufende Symmetrieachse angeordnet sein, wobei die Symmetrieachsen der Empfangsspulen 120, 122 beispielsweise gegeneinander um die Rotationsachse 112 verdreht sein können.

Insbesondere kann beispielsweise auf dem Schaltungsträger 114, insbesondere einer Leiterplatte, beispielsweise einer Sensorleiterplatte, die Erregerspule 116, beispielsweise eine Sendespule, angeordnet sein, beispielsweise integriert. Die Erregerspule 116 kann, beispielsweise um eine Erhöhung der Induktivität insbesondere zu bewirken, mit mehreren Windungen in einer oder mehreren Ebenen des Schaltungsträgers 114, beispielsweise der Sensorleiterplatte, ausgestaltet sein, insbesondere realisiert sein. Insbesondere kann die Erregerspule 116 beispielsweise ein frequenzbestimmendes Element eines LC Oszillators sein, dessen Resonanzfrequenz beispielsweise durch Auslegung der Erregerspule 116 und/oder beispielsweise mittels Kondensatoren (nicht dargestellt), insbesondere durch eine Bestückung mit Kondensatoren, derart eingestellt, insbesondere gewählt, werden kann, dass die Resonanzfrequenz beispielsweise in einem Bereich liegt von 0,5 MHz bis 10 MHz, insbesondere von 1 MHz bis 7 MHz, vorzugsweise von 1,5 MHz bis 5 MHz, besonders bevorzugt von 2,5 MHz bis 4,5 MHz. Beispielsweise kann ein Erregersignal, beispielsweise eine erregende Spannung, insbesondere die Spannung mit der die Erregerspule 116 beispielsweise beaufschlagt werden kann, derart eingestellt sein, dass sie Amplituden aufweist in einem Bereich von 0,1 V bis 20 V, beispielsweise von 0,5 V bis 15 V, insbesondere von 0,7 V bis 12 V, vorzugsweise von 1 V bis 5 V. Insbesondere kann durch einen Stromfluss in der Erregerspule 116 ein elektromagnetisches Wechselfeld entstehen, welches beispielsweise induktiv in die mindestens zwei Empfangsspulen 120, 122 koppelt.

Das Sensorsystem 110 weist weiterhin mindestens eine Steuerung 124 zur Bestimmung der mindestens einen Rotationseigenschaft aus Signalen der Empfangsspulen 120, 122 auf. Zu diesem Zweck sind die Empfangsspulen 120, 122 mittels mindestens einer Leitung bzw. einem Kanal 126 mit der Steuerung 124 verbunden. Die eine oder mehrere Leitungen bzw. Kanäle 126 sind zur Übertragung von (Ausgangs-) Signalen SIN_OUT, COS_OUT oder von auf eine andere geeignete Weise verarbeiteten Positionssignalen der Empfangsspulen 120, 122 an die Steuerung 124 geeignet. Die Positionssignale können beispielsweise in ein elektrisches Ausgangssignal einer Sensorelektronik 128 umgewandelt und zur Steuerung 124 übertragen werden. Die Sensorelektronik 128 ist zu diesem Zweck zwischen den Empfangsspulen 120, 122 und der Steuerung 124 angeordnet und mittels der mindestens einen Leitung bzw. dem mindestens einen Kanal 126 mit dieser verbunden. Die Steuerung 124 ist als Mikrocontroller ausgebildet.

Weiterhin weist das Sensorsystem 110 mindestens eine Steuerspule 130 auf. Der Schaltungsträger 114 trägt die Steuerspule 130. Die Steuerspule 130 ist mit der Steuerung 124 verbunden. So ist die Steuerspule 130 mittels einer Leitung bzw. eines Kanals 132 mit der Steuerung 124 verbunden. Wie nachstehend ausführlicher erläutert wird, ist die Steuerung 124 ausgebildet zum Verändern eines Lastwiderstands der Steuerspule 130 derart, dass Signale der Empfangsspulen 120, 122 zum Erzeugen mindestens einer Diagnoseinformation veränderbar sind. Die Leitung 132 ist zum Übertragen eines Steuersignals TEST_IN von der Steuerung 124 and die Steuerspule 130 geeignet.

Das Sensorsystem 110 umfasst weiterhin mindestens ein elektrisches oder elektronisches Schaltelement bzw. Steuerelement 134. Grundsätzlich kann das Schaltelement 134 ein Schalter, Mikroschalter, Transistor, Operationsverstärker, Komparator und/oder Multiplexer umfassen. Bei der gezeigten Ausführungsform ist das Schaltelement 134 ein Transistor 136. Das Sensorsystem 110 umfasst weiterhin bei der gezeigten Ausführungsform mindestens einen Logikbaustein 138, der das Schaltelement 134 aufweist. Das Schaltelement 134 bzw. der Logikbaustein 138 ist insbesondere als sogenannter open drain buffer ausgebildet bzw. verschaltet. Die Steuerung 124 ist ausgebildet zum Verändern des Lastwiderstands der Steuerspule 130 mittels des Schaltelements 134. Genauer ist die Steuerung 124 ausgebildet zum sprungweisen Verändern des Lastwiderstands der Steuerspule 130. So ist bei der gezeigten Ausführungsform die Steuerung 124 ausgebildet zum Verändern des Lastwiderstands der Steuerspule 130 zwischen einem (näherungsweise) Leerlauf und einem (näherungsweise) Kurzschluss.

Bei dem Sensorsystem 110 ist die Diagnoseinformation basierend auf Signalen SIN_OUT, COS_OUT der Empfangsspulen 120, 122 und eines zeitlichen Zusammenhangs der Signale der Empfangsspulen 120, 122 mit einem Steuersignal TEST_IN der Steuerung 124 zum Verändern des Lastwiderstands der Steuerspule 130 erzeugbar. Insbesondere ist die Diagnoseinformation basierend auf Amplituden der Signale SIN_OUT, COS_OUT der Empfangsspulen 120, 122 und eines zeitlichen Zusammenhangs der Signale der Empfangsspulen 120, 122 mit dem Steuersignal TEST_IN der Steuerung 124 zum Verändern des Lastwiderstands der Steuerspule 130 erzeugbar. Die Rotationseigenschaft des rotierenden Elements 112 ist basierend auf einem Verhältnis der Signale SIN_OUT, COS_OUT der Empfangsspulen 120, 122 bestimmbar.

Auf Aufforderung der Steuerung 124 wie z.B. durch eine pulsartige Veränderung des Steuersignals TEST_IN wird der Lastwiderstand der Steuerspule 130 im Spulensystem des Sensorsystems 110 verändert. Im einfachsten Ausführungsbeispiel verändert sich der effektive Lastwiderstand der Steuerspule 130 sprungweise zwischen (näherungsweise) Leerlauf und (näherungsweise) Kurzschluss in Abhängigkeit vom Steuersignal TEST_IN.

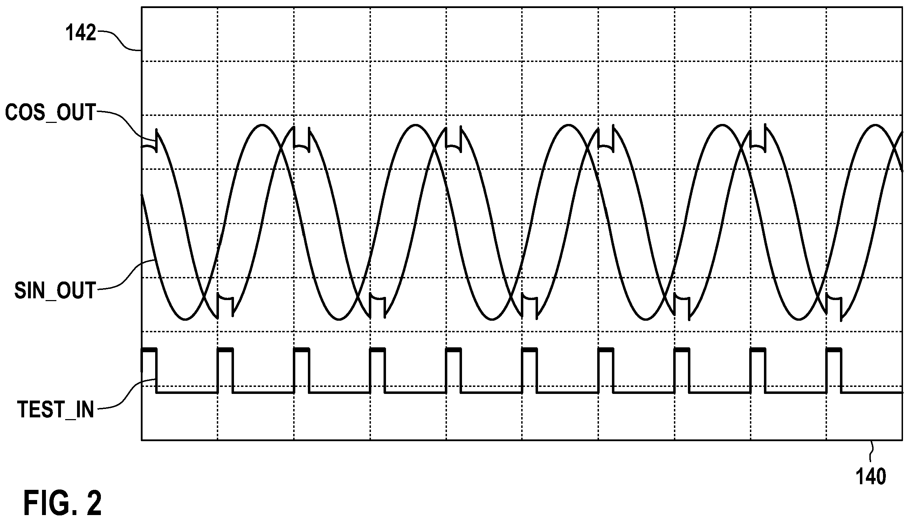

Figur 2 zeigt einen beispielhaften Verlauf von Signalen bei dem Sensorsystem 110 der ersten Ausführungsform. Auf der X-Achse 140 ist die Zeit aufgetragen. Auf der Y-Achse 142 sind das Steuersignal TEST_IN und die Signale SIN_OUT, COS_OUT der Empfangsspulen 120, 122 aufgetragen. Signale SIN_OUT, COS_OUT der Empfangsspulen 120, 122 weisen einen im wesentlichen sinus- bzw. cosinusförmigen Verlauf auf. Bei einer sprungweisen Veränderung des Steuersignals TEST_IN zeigt sich eine Veränderung der Amplitude beispielsweise im Signal COS_OUT.

Beim Umschalten des Steuersignals TEST_IN vom LOW zu HIGH Pegel wird die Steuerspule 130 durch den niederohmigen Zustand des Schaltelements 134 in Form eines Ausgangstransistors des Logikbausteins 136 nahezu kurzgeschlossen. Hervorgerufen durch die niederohmige Last der Steuerspule 130 sind kleinere Amplituden in den Ausgangssignalen SIN_OUT, COS_OUT erkennbar, solange das Steuersignal TEST_IN bei HIGH Pegel bleibt.

Die Winkel- bzw. Positionsinformation in den Signalen SIN_OUT, COS_OUT ist nicht von ihren Amplituden, sondern vom Verhältnis SIN_OUT/COS_OUT abhängig und kann in der Steuerung 124 durch eine Arkustangens Funktion ausgerechnet werden, beispielsweise in der Form: *Position = arctan(sin*/*cos).* Zusammengefasst kann nun die Funktionalität des Sensorsystems 110 von der Steuerung 124 überwacht werden durch Überwachung der Amplituden der Sensor-Ausgangssignale SIN_OUT, COS_OUT sowie ihres zeitlichen Zusammenhangs mit dem Steuersignal TEST_IN. Der Steuerung 124 bleibt dabei die Möglichkeit erhalten, die Winkel- bzw. Positionsinformation kontinuierlich aus den Sensor-Ausgangssignalen SIN_OUT, COS_OUT zu berechnen, da diese amplituden-unabhängig ist.

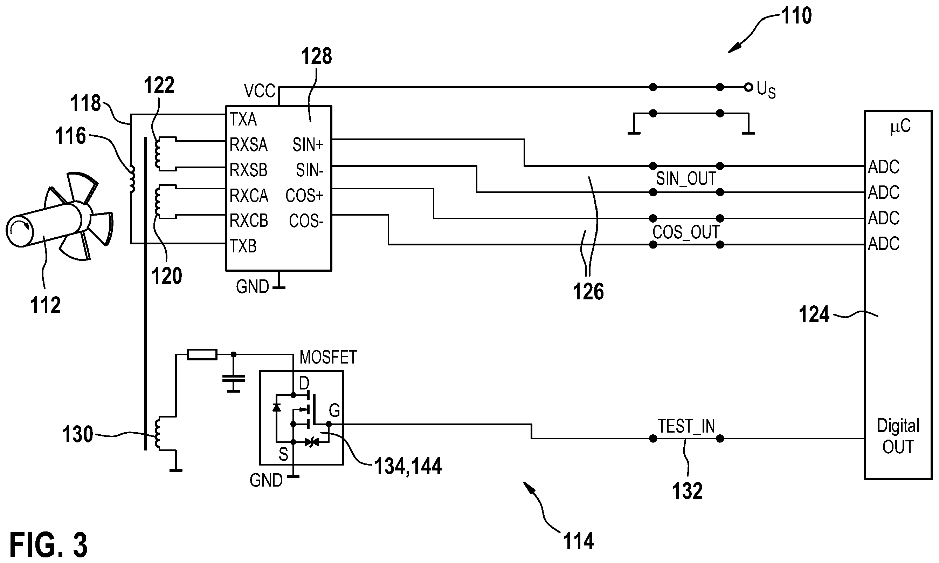

Figur 3 zeigt ein erfindungsgemäßes Sensorsystem 110 gemäß einer zweiten Ausführungsform. Nachstehend werden lediglich die Unterschiede zu der ersten Ausführungsform beschrieben und gleiche oder vergleichbare Bauteile sind mit gleichen Bezugszeichen versehen. Bei der zweiten Ausführungsform ist das Schaltelement 134 ein Feldeffekttransistor 144 in Form eines MOSFET. Die Funktionsweise der zweiten Ausführungsform ist prinzipiell identisch zu der ersten Ausführungsform.

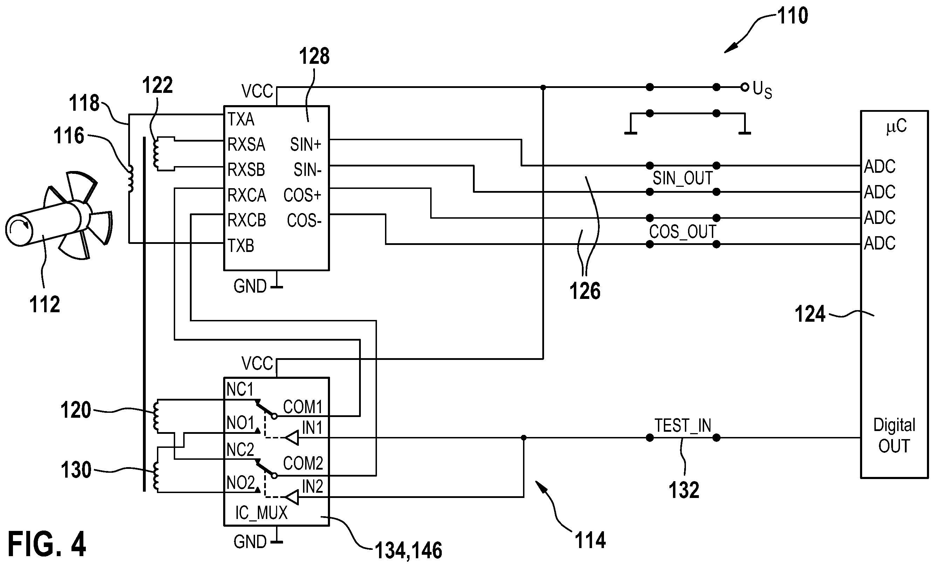

Figur 4 zeigt ein erfindungsgemäßes Sensorsystem 110 gemäß einer dritten Ausführungsform. Nachstehend werden lediglich die Unterschiede zu der ersten Ausführungsform beschrieben und gleiche oder vergleichbare Bauteile sind mit gleichen Bezugszeichen versehen. Bei der zweiten Ausführungsform ist das Schaltelement 134 ein Multiplexer 146 in Form eines analogen Zweikanalschaltelements. Dabei ist eine Empfangsspule 120 der Empfangsspulen 120, 122 in den Multiplexer integriert.

Auf Aufforderung der Steuerung 124 wie z.B. durch eine pulsartige Veränderung des Steuersignals TEST_IN werden die Empfangssignale in der Steuerspule 130 anstelle der Empfangsspule 120 ausgewertet. Im Übrigen ist die Funktionsweise der dritten Ausführungsform prinzipiell identische zu der ersten Ausführungsform.

In der ersten, zweiten sowie dritten Ausführungsformen wurde die Funktionsweise des erfindungsgemäßen Sensorsystems anhand der Beeinflussung von Analogsignalen SIN_OUT, COS_OUT (zusammengefasst Analogsignal-Schnittstelle) veranschaulicht. Alternativ zu Analogsignalen SIN_OUT, COS_OUT kann die Positionsinformation auf eine andere geeignete Weise in ein elektrisches Ausgangssignal der Sensorelektronik 128 umgewandelt und zur Steuerung 124 übertragen werden. Insbesondere kann zur Kommunikation bzw. zur Verbindung zwischen Sensorelektronik 128 und Steuerung 124 eine geeignete Digitalsignal-Schnittstelle verwendet werden. Insbesondere kann hier eine geeignete bidirektionale Digitalsignal-Schnittstelle verwendet werden, die unter anderem die Funktionalität vom Positionssignal-Kanal 126, vom Steuersignal-Kanal 132 abbildet.

Die Verwendung des beschriebenen Sensorsystems 110 lässt sich durch Messung der Signale an der Sensorelektronik und Analyse der Schaltung und ggf. Spulensysteme nachweisen.

## Patentansprüche

1. Sensorsystem (110) zur Bestimmung mindestens einer Rotationseigenschaft eines um mindestens eine Rotationsachse (112) rotierenden Elements, umfassend mindestens einen Schaltungsträger (114), wobei der Schaltungsträger (114) eine Erregerspule (116) aufweist, wobei die Erregerspule (116) mindestens einen Erregerbereich (118) umschließt, wobei der Schaltungsträger (114) in dem Erregerbereich (118) weiterhin mindestens zwei Empfangsspulen (120, 122) aufweist, wobei das Sensorsystem (110) weiterhin mindestens eine Steuerung (124) zur Bestimmung der mindestens einen Rotationseigenschaft aus Signalen der Empfangsspulen (120, 122) aufweist, wobei die Rotationseigenschaft des rotierenden Elements eine Winkelposition des rotierenden Elements ist und die Winkelposition des rotierenden Elements basierend auf einem Verhältnis der Signale der Empfangsspulen (120, 122) kontinuierlich bestimmbar ist,
**dadurch gekennzeichnet, dass**
der Schaltungsträger (114) weiterhin mindestens eine Steuerspule (130) aufweist,
wobei die Steuerspule (130) mit der Steuerung (124) verbunden ist, wobei die Steuerung (124) ausgebildet ist zum Verändern eines Lastwiderstands der Steuerspule (130) derart, dass Signale der Empfangsspulen (120, 122) zum Erzeugen mindestens einer Diagnoseinformation veränderbar sind.

2. Sensorsystem (110) nach dem vorhergehenden Anspruch, wobei die Steuerung (124) ausgebildet ist zum sprungweisen Verändern des Lastwiderstands der Steuerspule (130).

3. Sensorsystem (110) nach einem der vorhergehenden Ansprüche, wobei die Steuerung (124) ausgebildet ist zum Verändern des Lastwiderstands der Steuerspule (130) zwischen einem Leerlauf und einem Kurzschluss.

4. Sensorsystem (110) nach einem der vorhergehenden Ansprüche, weiterhin umfassend mindestens ein elektrisches oder elektronisches Schaltelement (134), wobei die Steuerung (124) ausgebildet ist zum Verändern des Lastwiderstands der Steuerspule (130) mittels des Schaltelements (134).

5. Sensorsystem (110) nach dem vorhergehenden Anspruch, wobei das Schaltelement (134) ein Schalter, Mikroschalter, Transistor (136), Operationsverstärker, Komparator und/oder Multiplexer (146) umfasst.

6. Sensorsystem (110) nach einem der beiden vorhergehenden Ansprüche, weiterhin umfassend mindestens einen Logikbaustein (138), wobei der Logikbaustein (138) das Schaltelement (134) aufweist.

7. Sensorsystem (110) nach einem der vorhergehenden Ansprüche, wobei die Diagnoseinformation basierend auf Signalen der Empfangsspulen (120, 122) und eines zeitlichen Zusammenhangs der Signale der Empfangsspulen (120, 122) mit einem Steuersignal der Steuerung (124) zum Verändern des Lastwiderstands der Steuerspule (130) erzeugbar ist.

8. Sensorsystem (110) nach einem der vorhergehenden Ansprüche, wobei die Diagnoseinformation basierend auf Amplituden der Signale der Empfangsspulen (120, 122) und eines zeitlichen Zusammenhangs der Signale der Empfangsspulen (120, 122) mit einem Steuersignal der Steuerung (124) zum Verändern des Lastwiderstands der Steuerspule (130) erzeugbar ist.

9. Sensorsystem (110) nach einem der vorhergehenden Ansprüche, wobei die Steuerung (124) ein Mikrocontroller ist.

## Claims

1. Sensor system (110) for determining at least one rotation property of an element rotating about at least one axis of rotation (112), comprising at least one circuit carrier (114), wherein the circuit carrier (114) has an excitation coil (116), wherein the excitation coil (116) encloses at least one excitation region (118), wherein the circuit carrier (114) furthermore has at least two receiving coils (120, 122) in the excitation region (118), wherein the sensor system (110) furthermore has at least one controller (124) for determining the at least one rotation property from signals from the receiving coils (120, 122), wherein the rotation property of the rotating element is an angular position of the rotating element and the angular position of the rotating element is able to be continuously determined on the basis of a ratio of the signals from the receiving coils (120, 122),
**characterized in that**
the circuit carrier (114) furthermore has at least one control coil (130), wherein the control coil (130) is connected to the controller (124),
wherein the controller (124) is designed to change a load resistance of the control coil (130) in such a way that it is possible to change signals from the receiving coils (120, 122) for generating at least one item of diagnostic information.

2. Sensor system (110) according to the preceding claim, wherein the controller (124) is designed to change the load resistance of the control coil (130) in a stepwise manner.

3. Sensor system (110) according to either of the preceding claims, wherein the controller (124) is designed to change the load resistance of the control coil (130) between an open circuit and a short circuit.

4. Sensor system (110) according to one of the preceding claims, furthermore comprising at least one electrical or electronic switching element (134), wherein the controller (124) is designed to change the load resistance of the control coil (130) by means of the switching element (134).

5. Sensor system (110) according to the preceding claim, wherein the switching element (134) comprises a switch, microswitch, transistor (136), operational amplifier, comparator and/or multiplexer (146).

6. Sensor system (110) according to one of the two preceding claims, furthermore comprising at least one logic chip (138), wherein the logic chip (138) comprises the switching element (134).

7. Sensor system (110) according to one of the preceding claims, wherein the diagnostic information is able to be generated on the basis of signals from the receiving coils (120, 122) and a temporal relationship of the signals from the receiving coils (120, 122) with a control signal from the controller (124) to change the load resistance of the control coil (130).

8. Sensor system (110) according to one of the preceding claims, wherein the diagnostic information is able to be generated on the basis of amplitudes of the signals from the receiving coils (120, 122) and a temporal relationship of the signals from the receiving coils (120, 122) with a control signal from the controller (124) to change the load resistance of the control coil (130).

9. Sensor system (110) according to one of the preceding claims, wherein the controller (124) is a microcontroller.

## Revendications

1. Système de capteur (110) permettant de déterminer au moins une caractéristique de rotation d'un élément tournant autour d'au moins un axe de rotation (112), comprenant au moins un support de circuit (114), le support de circuit (114) portant une bobine d'excitation (116), la bobine d'excitation (116) entourant au moins une zone d'excitation (118), dans lequel le support de circuit (114) comporte dans la zone d'excitation (118) en outre au moins deux bobines réceptrices (120, 122), le système de capteur (110) présentant en outre au moins une commande (124) pour déterminer ladite au moins une caractéristique de rotation à partir de signaux des bobines réceptrices (120, 122), la caractéristique de rotation de l'élément tournant étant une position angulaire de l'élément tournant et la position angulaire de l'élément tournant pouvant être déterminée en continu sur la base d'un rapport des signaux des bobines réceptrices (120, 122),
**caractérisé en ce que**
le support de circuit (114) comporte en outre au moins une bobine de commande (130), la bobine de commande (130) étant reliée à la commande (124),
la commande (124) étant conçue pour modifier une résistance de charge de la bobine de commande (130) de telle sorte que les signaux des bobines réceptrices (120, 122) puissent être modifiés pour générer au moins une information de diagnostic.

2. Système de capteur (110) selon la revendication précédente, dans lequel la commande (124) est conçue pour modifier la résistance de charge de la bobine de commande (130) par sauts.

3. Système de capteur (110) selon l'une des revendications précédentes, dans lequel la commande (124) est configurée pour modifier la résistance de charge de la bobine de commande (130) entre un circuit ouvert et un court-circuit.

4. Système de capteur (110) selon l'une quelconque des revendications précédentes, comprenant en outre au moins un élément de commutation électrique ou électronique (134), dans lequel la commande (124) est conçue pour modifier la résistance de charge de la bobine de commande (130) au moyen de l'élément de commutation (134).

5. Système de capteur (110) selon la revendication précédente, dans lequel l'élément de commutation (134) comprend un interrupteur, un micro-interrupteur, un transistor (136), un amplificateur opérationnel, un comparateur et/ou un multiplexeur (146).

6. Système de capteur (110) selon l'une des deux revendications précédentes, comprenant en outre au moins un composant logique (138), le composant logique (138) comprenant l'élément de commutation (134).

7. Système de capteur (110) selon l'une des revendications précédentes, dans lequel l'information de diagnostic peut être générée sur la base de signaux des bobines réceptrices (120, 122) et d'une relation temporelle des signaux provenant des bobines réceptrices (120, 122) avec un signal de commande provenant de la commande (124) pour modifier la résistance de charge de la bobine de commande (130).

8. Système de capteur (110) selon l'une des revendications précédentes, dans lequel l'information de diagnostic peut être générée sur la base d'amplitudes des signaux provenant des bobines réceptrices (120, 122) et d'une relation temporelle des signaux provenant des bobines réceptrices (120, 122) avec un signal de commande provenant de la commande (124) pour modifier la résistance de charge de la bobine de commande (130).

9. Système de capteur (110) selon l'une des revendications précédentes, dans lequel la commande (124) est un microcontrôleur.
